# EUROPÄISCHE PATENTANMELDUNG

(11) **EP 0 978 662 A1**
(43) Veröffentlichungstag der Anmeldung: **09.02.2000**
(21) Anmeldenummer: 99112536.0
(22) Anmeldetag: 01.07.1999
(51) Int. Cl.: F16B 13/06

(54) **Spreizanker**

(30) Priorität: 04.08.1998 DE 29813932 U
(71) Anmelder: fischerwerke Artur Fischer GmbH & Co. KG, 72178 Waldachtal (DE)
(72) Erfinder: Gallatz, Armin, 72186 Empfingen (DE)

(57) **Zusammenfassung**

Es wird ein Spreizanker (1) mit einem an seinem hinteren Ende einen Kopf (3) zum Befestigen einer Montageschiene aufweisenden Schaft (2) vorgeschlagen, der an seinem vorderen Ende eine im Querschnitt abgesetzten und eine elastisch verformbare Spreizhülse (6) aufnehmenden Abschnitt (4) mit einem sich zum vorderen Ende hin anschließenden Spreizkonus (5) aufweist. Um größere Befestigungslöcher in der Montageschiene und damit einen größeren Schaftdurchmesser des Spreizankers (1) mit entsprechend höheren Haltewerte zu ermöglichen, ist der Kopf (3) langgestreckt ausgebildet. Ferner weist das hintere Schaftteil (2) wenigstens eine wendelförmig verlaufende Längskante (7) auf, deren vorderes Stirnende (8) gegenüber dem hinteren Stirnende (9) um 90° versetzt ist. Durch die Längskante (7) wird der Spreizanker (1) beim Eintreiben in ein Bohrloch um 90° verdreht, so daß die Längsseite des Kopfes (3) quer das Langloch (14) der Montageschiene (11) überdeckt.

## Beschreibung

Die Erfindung betrifft einen Spreizanker zum Befestigen einer Montageschiene gemäß dem Oberbegriff des Anspruches 1.

Zur Befestigung einer Montageschiene kann beispielsweise ein aus der DE 35 26 784 A1 bekannter Spreizanker verwendet werden, dessen Schaft an seinem hinteren Ende einen Kopf und an seinem vorderen Ende einen im Querschnitt abgesetzten Abschnitt aufweist, auf den eine elastisch verformbare Spreizhülse übergestülpt ist. Beim Einschlagen des Spreizankers in ein Bohrloch verspannt sich die Spreizhülse im Bohrloch, so daß mit dem Kopf des Spreizankers ein Gegenstand an der Wand befestigbar ist. Zur Befestigung einer Montageschiene, die ein U-Profil mit eingebogenen Längsrändern aufweist, muß der Kopf des Spreizankers durch den durch die Längsränder gebildeten Spalt der Montageschiene passen, um den Bodensteg der Montageschiene an der Wand verspannen zu können. Das Befestigungsloch in der Montageschiene entspricht dem Schaftdurchmesser des Spreizankers. Um eine ausreichende Überdeckung am Befestigungsloch der Montageschiene zu erhalten, muß daher ein Spreizanker mit einem relativ kleinen Schaftdurchmesser verwendet werden. Zur Erzielung einer ausreichenden Haltekraft sind somit für die Befestigung einer Montageschiene eine größere Anzahl von Spreizankern erforderlich.

Der Erfindung liegt die Aufgabe zugrunde, einen Spreizanker für die Befestigung von Montageschienen zu schaffen, der größere Befestigungslöcher in der Montageschiene und damit einen größeren Schaftdurchmesser der Spreizanker mit entsprechend höheren Haltekräften erlaubt.

Die Lösung dieser Aufgabe wird durch die im Anspruch 1 angegebenen Merkmale erreicht. Durch den langgestreckten Kopf des Spreizankers ergibt sich in einer Richtung ein Außenmaß des Kopfes, das länger ist als die lichte Weite des Spaltes zwischen den Längsrändern der Montageschiene. Die Schmalseite des Kopfes ist so gewählt, daß sie annähernd dem Schaftdurchmesser des Spreizankers entspricht und gerade durch den Spalt der Montageschiene paßt. Zur Befestigung der Montageschiene wird der Spreizanker durch das Befestigungsloch der Montageschiene hindurch in ein dem Schaftdurchmesser des Spreizankers entsprechendes Bohrloch im Verankerungsgrund soweit eingeschoben, bis sich der Kopf des Spreizankers unterhalb der eingebogenen Längsränder der Montageschiene befindet. In dieser Stellung kommen die am hinteren Schaftteil des Spreizankers angeordneten wendelförmig verlaufenden Längskanten zum Eingriff im Bohrloch des Verankerungsgrundes. Durch weiteres Eintreiben des Spreizankers beispielsweise mit einem Setzwerkzeug verdreht sich der Spreizanker zwangsläufig aufgrund der wendelförmigen Längskanten um 90°, so daß die Längsseite des Kopfes quer zu den durch die Längsränder gebildeten Spalt der Montageschiene steht. Damit ergibt sich eine ausreichende Überdeckung des Kopfes am Befestigungsloch auch dann, wenn das Befestigungsloch als Langloch zum Ausgleich von Abstandstoleranzen zwischen den Befestigungspunkten einerseits oder zum Ausrichten von mehreren nebeneinanderliegenden Montageschienen andererseits ausgebildet ist.

Die wendelförmig verlaufende Längskante kann beispielsweise durch ein oder mehrere radial abstehende Längsrippen oder durch ein um 90° verdrehtes Mehrkantprofil, vorzugsweise einem Vierkantprofil, gebildet sein.

In der Zeichnung sind Ausführungsbeispiele der Erfindung dargestellt. Es zeigen:
- Figur 1: den erfindungsgemäßen Spreizanker;
- Figur 2: eine weitere Ausführungsform des Spreizankers;
- Figur 3: die Befestigung einer Montageschiene mit dem Spreizanker gemäß Figur 2 im Schnitt; und
- Figur 4: eine Draufsicht auf die befestigte Montageschiene gemäß Figur 3.

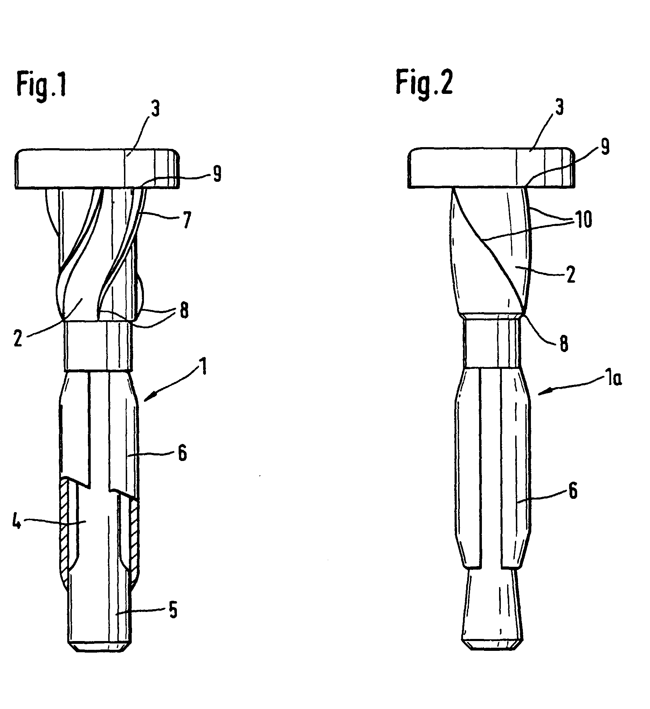

Der in Figur 1 dargestellte Spreizanker 1 besteht aus einem Schaft 2, der an seinem hinteren Ende einen länglichen Kopf 3 aufweist. Der vordere Bereich des Schaftes 2 hat einen abgesetzten Abschnitt 4, an dessen Ende sich ein Spreizkonus 5 anschließt. Über den abgesetzten Abschnitt 4 ist eine elastisch verformbare, als Federhülse ausgebildete Spreizhülse 6 übergestülpt. Der hintere Teil des Schaftes 2 ist mit vier wendelförmig verlaufenden Längsrippen 7 versehen, die den Schaft 2 radial überragen. Das vordere, spitz auslaufende Stirnende 8 der Längsrippen 7 ist gegenüber dem hinteren, am Kopf 3 auslaufenden Stirnende 9 um 90° versetzt, so daß beim Einschlagen des Spreizankers 1 in ein Bohrloch zwangsläufig eine Verdrehung des Spreizankers im Bohrloch um 90° stattfindet.

Ein weiteres Ausführungsbeispiel des Spreizankers 1a ist in Figur 2 dargestellt. Bei dieser Ausführungsform ergeben sich die wendelförmig verlaufenden Längskanten 10 durch ein um 90° verdrehtes Vierkantprofil des hinteren Schaftteils 2.

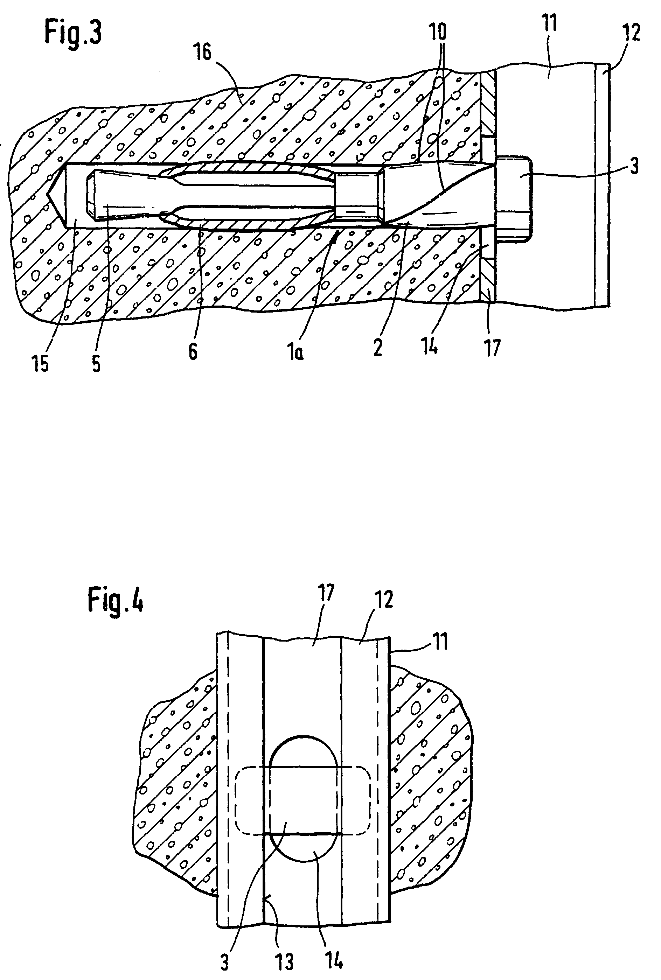

Figur 3 zeigt die Befestigung einer Montageschiene 11 mit dem in Figur 2 dargestellten Spreizanker 1a. Die Montageschiene 11 ist ein U-Profil mit eingebogenen Längsrändern 12, so daß ein Spalt 13 entsteht. Der Spreizanker 1a wird durch das Langloch 14 im Bodensteg 17 der Montageschiene 11 in das Bohrloch 15 des Bauteils 16 in einer Stellung des Kopfes 3 des Spreizankers 1a eingeschoben, bei der die Längsseite des Kopfes 3 mit dem Spalt 13 fluchtet. Sobald sich der Kopf 3 unterhalb der Längsränder 12 befindet, wird der Spreizanker 1a durch die wendelförmig verlaufenden Längskanten 10 des Vierkantprofils des hinteren Schaftteiles 2 bei weiterem Einschlagen soweit verdreht, daß die Längsseite des Kopfes 3 nach der durchgeführten Montage annähernd rechtwinklig zu dem Langloch 14 im Bodensteg 17 der Montageschiene 11 steht. Dadurch ergibt sich eine ausreichende Überdeckung zur Verspannung der Montageschiene 11 an der Außenfläche des Bauteils 16. Gleichzeitig verspannt sich die Spreizhülse 6 im Bohrloch 15, die im unverankerten Zustand einen etwas größeren Außendurchmesser gegenüber dem Bohrlochdurchmesser aufweist. Aufgrund der Federwirkung der Spreizhülse 6 ergibt sich ein radialer, nach außen wirkender Spreizdruck, der die Verankerung des Spreizankers 1a bewirkt. Durch eine über die Montageschiene 11 am Kopf 3 des Spreizankers 1a angreifenden Zugbelastung wird über den Konus 5 die Spreizkraft verstärkt, so daß sich eine selbstklemmende, mit zunehmender Zugbelastung sich verstärkende Verankerung ergibt. Da für die Befestigung der Montageschiene 11 nur der länglich ausgebildete Kopf 3 benötigt wird, der nach der Montage nur geringfügig in den Hohlraum der Montageschiene 11 hineinragt, können in die Montageschiene 11 Kopfschrauben (nicht dargestellt) eingeführt und ohne Probleme im Hohlraum der Montageschiene 11 verschoben werden.

## Patentansprüche

1. Spreizanker mit einem an seinem hinteren Ende einen Kopf zum Befestigen einer Montageschiene aufweisenden Schaft, der an seinem vorderen Ende einen im Querschnitt abgesetzten und eine elastisch verformbare Spreizhülse aufnehmenden Abschnitt mit einem sich zum vorderen Ende hin anschließenden Spreizkonus aufweist, **dadurch gekennzeichnet**, daß der Kopf (3) langgestreckt ausgebildet ist, und daß das hintere Schaftteil (2) wenigstens eine wendelförmig verlaufende Längskante (7, 10) aufweist, deren vorderes Stirnende (8) gegenüber dem hinteren Stirnende (9) um 90° versetzt ist.

2. Spreizanker nach Anspruch 1, **dadurch gekennzeichnet,** daß die wendelförmig verlaufende Längskante durch ein oder mehrere radial abstehende Längsrippen (7) gebildet ist.

3. Spreizanker nach Anspruch 1, **dadurch gekennzeichnet,** daß die wendelförmig verlaufenden Längskanten (10) durch ein um 90° verdrehtes Mehrkantprofil des hinteren Schaffteiles (2) gebildet sind.

4. Spreizanker nach Anspruch 1, **dadurch gekennzeichnet**, daß der Kopf (3) rechteckförmig ausgebildet ist, wobei die Schmalseite geringfügig kleiner ist als die lichte Weite des durch die eingebogenen Längsränder (12) der Montageschiene (11) gebildeten Spalts (13).
